# EUROPEAN PATENT SPECIFICATION

(11) **EP 0 664 725 B1**
(45) Date of publication and mention of the grant of the patent: **11.10.2000**
(21) Application number: 94915523.8
(22) Date of filing: 07.04.1994
(51) Int. Cl.: B01D 17/00, C10G 33/08, G05D 9/00, B01J 8/00, G01F 23/00, E21B 43/34, E21B 44/00, E21B 15/00

(54) **PLANT FOR SEPARATION OF LIGHT-WEIGHT HYDROCARBONS AND THEIR AROMATICS FROM EMULSIONS**
ANLAGE ZUR ABSCHEIDUNG VON LEICHTEN KOHLENWASSERSTOFFEN UND AROMATEN VON EMULSIONEN
DISPOSITIF UTILISE POUR LA SEPARATION D'HYDROCARBURES LEGERS ET DE LEURS AROMATIQUES DANS DES EMULSIONS

(43) Date of publication of application: 02.08.1995
(73) Proprietor: OILMASTER ANTI-POLLUTION SYSTEMS, Boulogne sur mer (FR)
(72) Inventor: Doerr, Dieter Eugen, Dover, Kent CT17 9DD (GB)
(74) Representative: Ecrepont, Robert
(86) International application number: EP9401075
(87) International publication number: WO9427699

(56) References cited:
- No relevant documents disclosed

## Description

The present invention relates generally to the separation of hydrocarbons from water and more particularly to an apparatus and a method for the separation of light-weight hydrocarbons and aromatics from production water.

Centrifuges are utilized for the separation of emulgated production water on offshore production platforms operated by the oil and gas industries. The best values attained for overboard water are 80 ppm. Depending on the national regulations the value reached by devices like that does not fulfill the legally defined limits.

Another method to get rid of such emulsions is to inject them back into the sea bottom which is neither regarded as being optimum.

The problem to be solved is the development of an apparatus for the separation of light-weight hydrocarbons and aromatics from production water, so that the content of said hydrocarbons and aromatics is minimized.

For the separation of light weight hydrocarbons and aromatics from production water, we know an apparatus EP-A-0128071 comprising a rectification unit consisting a lower and an upper part.

According to the present invention this problem is solved by an apparatus for the separation of light-weight hydrocarbons and aromatics from production water in an emulgated water feed stream, the apparatus comprising a vacuum rectification unit consisting of a lower and an upper part, wherein :
- a perforated stage vessel is contained within the lower part of the rectification unit and comprises devices for receiving and heating emulgated water, the lower part of the unit further comprising means for leading the heated emulgated water through the annular space between the perforated stage vessel and an outer mantle at the pressure side of the unit to a nozzle ring at the top of the perforated stage vessel for spraying emulgated water over the top section of the perforated plates arranged at one or more levels within the inner mantle for counterflow-system rectification and for concentrating organic compounds contained in the production water into a vapour stream,
- and the upper part of the vacuum rectification unit comprising a hydrocyclone receiving the vapour stream and a downstream condenser comprising a condensate collecting basin, for condensating the vapour generated at the perforated stage vessel with the condensate being subjected to further processing or led to a storage tank.

In another embodiment of the present invention the upper half of the rectification-unit comprises further a filter pack above the condenser for holding back condensate and solids.

Furthermore, the upper half of the rectification-unit can comprise baffle plates to lead the remains of the vapor towards an outlet on top-center of the rectification-unit.

In an alternative the upper half of the rectification-unit further comprises devices for evacuating the remains of the vapor whereby said devices may additionally or solely comprise one or more means selected from the group consisting of evacuation pipe, condensate trap, retention-valve, and dry-running vacuum pump.

The apparatus can be designed the way that the perforated stage vessel contains a pipe leading to the center of the inside section of the rectification-unit and at an angle of 90° down to the perforated plate-trays to the center outlet of the perforated stage vessel.

In a preferred embodiment of the inventive apparatus the flow of the emulgated water is directed between the housing of the perforated stage vessel and the outer mantel of the rectification-unit from the center outlet of the perforated stage vessel upwardly to the spraying devices.

In a different embodiment the apparatus can comprise devices for leading the remaining liquid fraction with a boiling point above the one of water, to the sump of the rectification-unit flowing down through the tunnel plate sections and the perforated plate sections to the sump of the rectification - unit.

Furthermore the apparatus can comprise devices to blow down periodically the sump, with the sump being delivered to a storage tank or submitted to further processing.

In a different embodiment the apparatus further comprises devices to blow down automatically the sump with the sump being delivered to a storage tank or submitted to a further processing.

In a particularly preferred embodiment of the present invention the perforated stage vessel further comprises devices allowing counterflow system rectification within the perforated stage vessel.

The apparatus according to the present invention can additionally comprise means for the injection of freshwater to prevent saturation of the sump.

Inductive conductivity sensor may be used to generate signals being used for the prevention of saturation of the sump in a further embodiment.

In an alternative the upper part of the rectification-unit further comprises devices for removing the condensate.

It is especially preferred that the devices for removing the condensate in/from the upper part of the rectification-unit comprises at least one condensate pump.

Preferably, a condensate pump being activated by at least one floatswitch located in the condensate-collecting-basin.

In a different alternative of the present invention at least one suction fine for a condensate pump is fitted to the condensate-collecting-basin below the long-position of the condensate.

In a different alternative of the present invention the condensate is removed from the condensate-collecting-basin passing a heat exchanger mounted inside the rectification--unit before being submitted to further processing or storage.

The inventive apparatus may further comprise devices for preventing flooding of the rectification-unit. Most preferably the apparatus is provided with devices for preventing flooding comprising a pipe, a solenoid-valve and pumping means, by pumping excess fluid back to an appropriate earlier processing step and the corresponding devices, respectively.

In a further embodiment devices for avoiding dry-running of the rectification unit are comprised. Preferably, said devices for avoiding dry-running of the rectification-unit comprise a pipe, a solenoid-valve and a freshwater supply controlled by one or more float switches.

In a further embodiment a condensate obtained from rectification is subjected to UV-oxidation.

It is preferred to provide the apparatus according to the present invention with a measuring devices for aliphatics which is connected with the fine releasing the processed production water to the environment, for analysis of oil-in-water contents before the processed production water is released.

It is most preferred to provide said apparatus with a measuring devices for aliphatics connected with the line releasing a processed production water to the environment, for analysis of oil-in-water contents, before the processed production water is released, is coupled to a solenoid-valve which will close the line releasing the processed production water and recycle the contaminated water back to an earlier processing step and the corresponding devices, respectively, if preset values for aliphatics in processed production water are not met.

In a further embodiment the apparatus comprises a measuring devices for aromatics which is connected with the line releasing the processed production water to the environment for analysis of oil-in-water contents before the processed production water is released.

In a preferred embodiment a measuring device for aromatics is connected with a line releasing a processed production water to the environment, for analysis of oil-in-water contents, before the processed production water is released, is coupled to a solenoid-valve which will close the line releasing the processed production water and recycle contaminated water back to an earlier processing step and the corresponding devices, respectively, if preset values for aromatics in processed production water are not met.

In an alternative the apparatus is comprised of three insulated sections.

In another embodiment the apparatus is mounted on a skid.

In a preferred embodiment the rectification-unit is a vacuum rectification-unit.

The invention further relates to a method for the separation of light-weight hydrocarbons and aromatics from production water being characterized by the flow of emulgated water through an apparatus with the emulgated water to be treated within the rectification-unit being heated to a temperature of about 40°C at a pressure of 7400 Pa (55,5 Torr).

The advantages related to the apparatus according to the present invention refer particularly to the content of aliphatics and aromatics. Said apparatus allows the reduction of the concentration of aliphatics and aromatics far beyond the limit accessible right now via centrifuges for the separation of emulgated production water on offshore production platforms.

The devices for spraying the emulgated water over the top section of the perforated plates comprising a nozzle ring at the upper end of the perforated stage vessel are especially beneficial because spraying causes faster vaporization and increases the flow rate of the emulgated water to be processed.

The inventive apparatus comprising devices allowing counterflow system rectification within the perforated stage vessel offers further advantages. The steam phase contains all components that are supposed to be separated, where in general the lighter volatile components will appear in a higher concentration in the steam than in the liquid. In this case the component will be concentrated by a single vaporization, but not separated. The latter one being possible with the counterflow-system rectification.

By fitting at least one suction line for a condensate pump to the condensate-collecting-basin below the low position of the condensate the vacuum needed for the proper operation of said apparatus is secured.

A further advantage of an embodiment of the present apparatus is obtained by the condensate being removed from the condensate-connecting-basin, passing the heat exchanger mounted inside the rectification-unit before being submitted to further processing or storage. Because of this electric energy can be saved, rendering the operation of the inventive apparatus more economic.

Safety of operations is realized by the measures taken to avoid dry-running such as incorporating devices for avoiding dry-running of the rectification-unit comprising a pipe, a solenoid-valve and a freshwater supply control by one or more floatswitches.

A further advantage of the inventive apparatus is based on the reduction of the concentration of aromatics by linking an UV-oxidation unit to the rectification-unit.

Further benefits result from the fact that if the apparatus comprises measuring devices for aliphatics and/or aromatics which are connected with the line releasing the process production water to the environment, for analysis of oil-in-water contents, before the processed production water is released, and which are coupled to solenoid-valves which will close the line releasing the process production water and recycle the contaminated water back to an earlier process step and a corresponding devices, respectively, if preset values for aromatics and/or aliphatics in processed production water are not met. Because of this online control less samples have to be taken to laboratories for analysis by helicopters.

In fact only one flight per month for purposes like that is necessary to calibrate the appropriate apparatus.

Additionally, because of this special embodiment of said apparatus control of the installation and operation is guaranteed hence avoiding pollution of the sea.

By being comprised of three insulated sections, preferably being mounted on a skid, advantageous individual removal for repair, maintenance or placing to another location on board a platform can easily be performed.

Other advantages are inherent in the apparatus and method claimed and disclosed or will become apparent to those skilled in the art from the following detailed description in conjunction with the accompanying diagrammatic drawings whereby
Fig. 1 is showing the vacuum rectification-unit of the inventive apparatus for the separation of light-weight hydrocarbons and aromatics from production water;
Fig. 2 is showing the lower section of a vacuum rectification-unit as illustrated in fig. 1;
Fig. 3 is showing the sump of a vacuum rectification-unit as illustrated in fig. 1;
Fig. 4 is showing the center top of a vacuum rectification-unit as illustrated in fig. 1;
Fig. 5 is showing the head of a vacuum rectification-unit as illustrated in fig. 1;
Fig. 6 is showing a block-diagram of the inventive apparatus for the separation of light-weight hydrocarbons and aromatics from production water;
Fig. 7 is showing a flow-diagram of the inventive apparatus for the separation of light-weight hydrocarbons and aromatics from production water;
Fig. 8 is showing an arrangement of components and skid-mounting-plates;
Fig. 9 is showing a skid with three containers for the reception of the inventive apparatus.

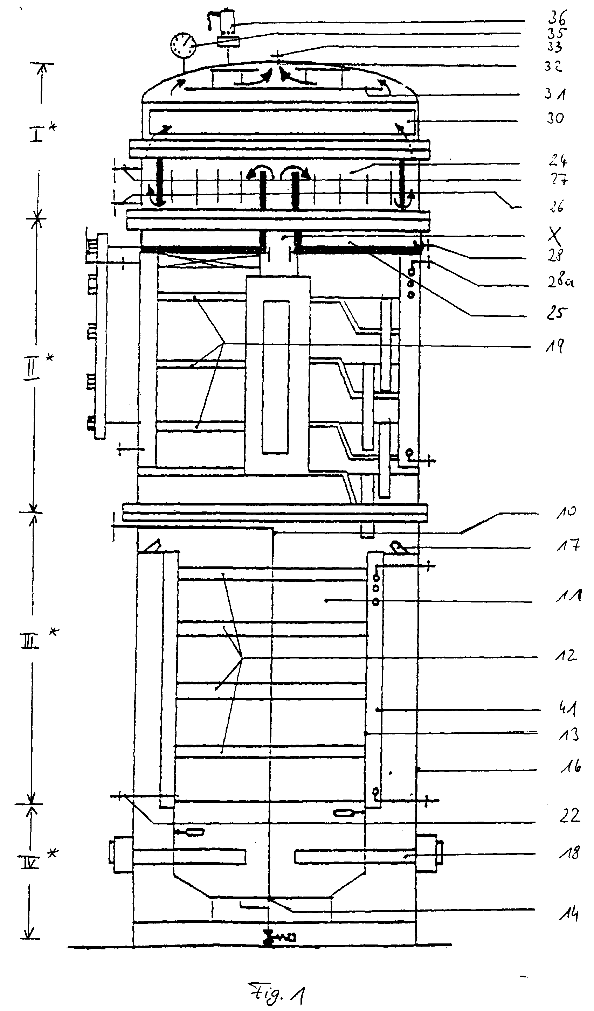

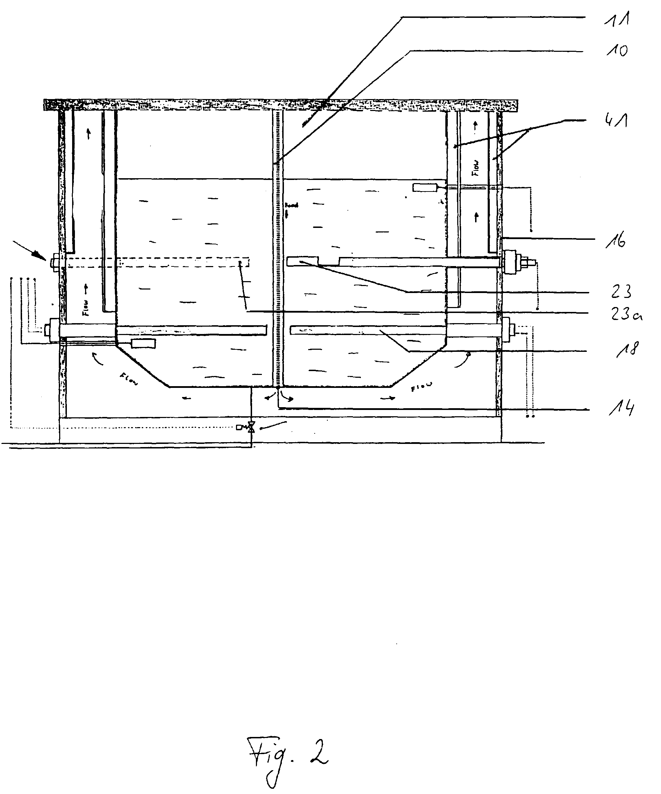

Fig. 1 is showing the rectification-unit of the inventive apparatus for the separation of light-weight hydrocarbons and aromatics from production water. The rectification-unit can be divided into several functional units shown in more details in figures 2 to 5, such as head (I*), center-top (II*), lower section (III*), and sump (IV*).

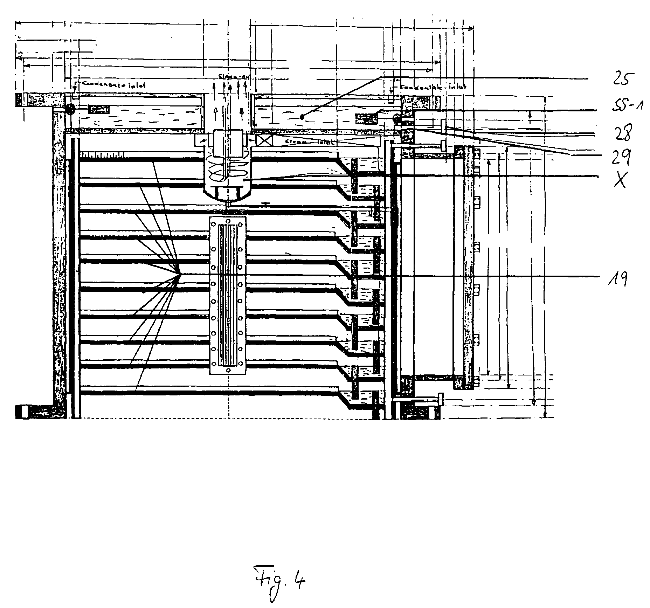

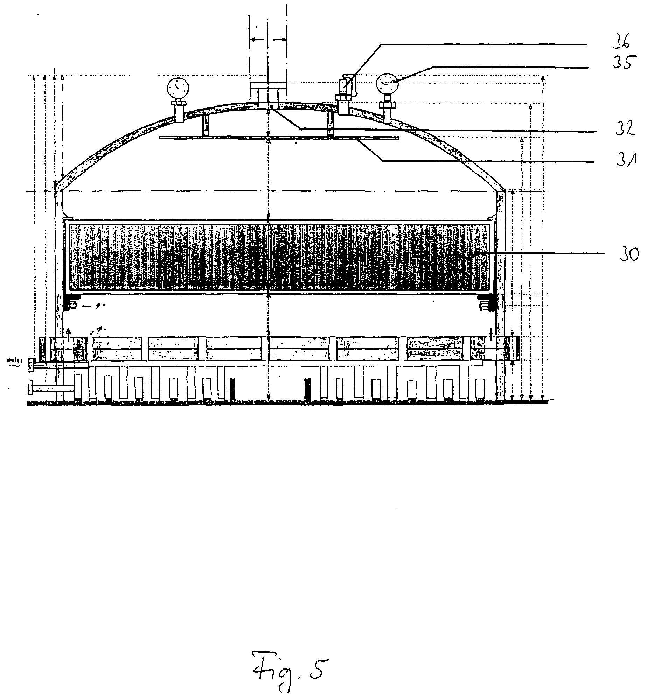

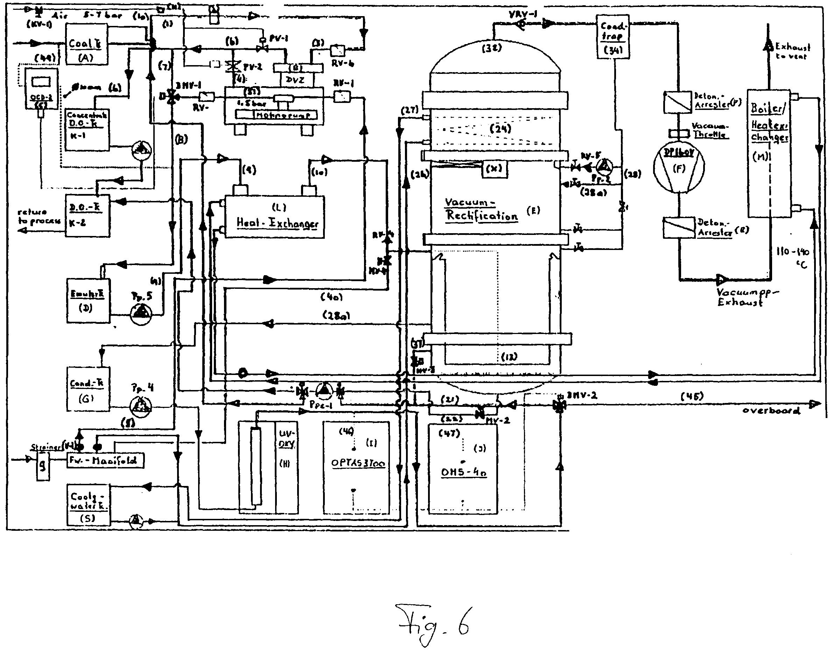

As it will be referred to this figure in the description of fig. 6, some of the devices and means not shown in fig. 1 but in fig. 6, will already be specified here by noting the corresponding reference numbers in brackets.

Pipe 10 is welded airtight to the housing of (E), leading then to the center 11 of the inside section and at an angle of 90° down through the perforated plate trays 12, to the center outlet 14 of the vessel 13. The pipe is welded to the bottom of this vessel. The perforated stage vessel fills out the lower half of the rectification-unit and serves as a waterlock to hold the vacuum in the unit stable.

Leaving this vessel the emulgated water flows now between the housing of the vessel 13a and the outer mantel of the rectification-unit 16 upward to the top. At the upper end of the vessel, the nozzle ring 17 has been welded in, where the emulgated feedwater is pressed through the nozzles and sprayed out over the top section of the perforated plates 12. Spraying in the emulgated water causes faster vaporization and increases the flow rate.

By means of electric heater elements 18, the emulgated water will be heated up to the boiling point (at approximately 40°C an a vacuum of 7400 Pa).

It has to be pointed out that during the separation of light-weight hydrocarbon-mixtures all components will be volatile. The steam phase contains all components that are supposed to be separated, where in general the lighter volatile components will appear in a higher concentration in the steam than in the fluid. In this case the components will be concentrated by a single vaporization, but not separated. This is possible with the counterflow-system rectification. The exchange of the media can be improved by increasing the flow-speed, which causes the laminar sub-surface to be thinner, but the turbulence increases.

Because most of the aromatics are having a boiling point higher than water (except benzol etc. with 80.5°C), attention has to be paid that the temperature in the rectification-unit stays constant and stable and will not rise above the boiling point of water. In this way only water and benzene-aromatics will be steamed out, the rest of the aromatics (xylene, toluene etc.) will remain in a liquid state, flowing back down through the tunnel plate section 19 and the perforated plate sections 12, to the sump of the rectification-unit. The sump of the unit will be blown down automatically and periodically by means of a solenoid-valve (Mv-2) and through pipe 22.

A concentrate pump (Ppe-1) delivers the concentrated fluid to the dirty oil/concentrated tank (K-1). A density control 23 activates a solenoid-valve (MV-2) and a concentrate pump (Ppe-1). The inductive conductivity sensor prevents saturation (chlorides) of the sump by injection of freshwater.

In the upper half of the rectification-unit the vapor is forced to a hydrocyclone X and after this through a condenser 24 where a condensate-collecting-basin 25 is located, where the vapor is forced through and condenses. The condenser will be supplied with freshwater through the pipes 26 and 27. The condensate will be collected in the condensate-collecting-basin 25 and through pipe 28 and a retention-value RV-5 pumped out by the condensate pump. The condensate pump will be activated by means of floatswitches located in the condensate-collecting-basin.

To an outlet opening (29) of the condensate-collecting-basin 25 a discharge pipe 28 is adapted acting as suction line of a condensate pump (Ppe-2). The suction line is fitted to the condensate-collecting-basin below the low position of the condensate (floatswitch) to secure the vacuum. After the condensate pump (Ppe-2) the condensate will flow through a pipe (28a) and heat exchanger 41 in the lower section of the rectification-unit into a skid mounted condensate tank (G). The condensate will transfer its heat to the heat exchanger to the entering emulgated water, saving in this way electric energy.

Above the condenser a filter pack 30 has been installed, holding condensate and solids back. The remains of the vapor will be led around baffle plates 31 towards the outlet 32 on top center of the rectification-unit and evacuated through a pipe (33).

For safety reasons a contact-manovacuummeter 35 has been installed in the head of the rectification-unit, connected with the electrical heater elements 18. Should the vacuum be lost, the heater elements will automatically be switched off to avoid increasing steam pressure. Furtheron a pressure-relief-valve 36 is installed.

Fig. 2 is showing the lower section of the rectification-unit as illustrated in fig. 1.

Here some of the means and devices are illustrated in a more detailed manner. Pipe 10 is leading to the center 11 of the inside section of the perforated stage vessel forming the lower part of the rectification-unit. At the bottom of the vessel outlet 14 allows the emulgated water to exit from the vessel to be flown between the housing of the vessel 13 and the outer mantel of the rectification-unit 16 upward to the top. Heater elements 18 are used to heat up the emulgated water to the boiling point at approximately 40°C and a vacuum of 7400 Pa (55,5 Torr). A density control 23 activates a solenoid-valve which is used to blow down automatically and periodically the sump of the unit. Additionally a concentrate pump is activated by them. Furthermore inductive conductivity sensor 23a is mounted in the sump region of the perforated stage vessel within the rectification column to prevent saturation of the sump by injection of freshwater.

Finally heat exchanger 41 can be seen being supplied with energy by the condensate collected within the condensate-collecting-basin 25 in the upper half of the rectification - unit.

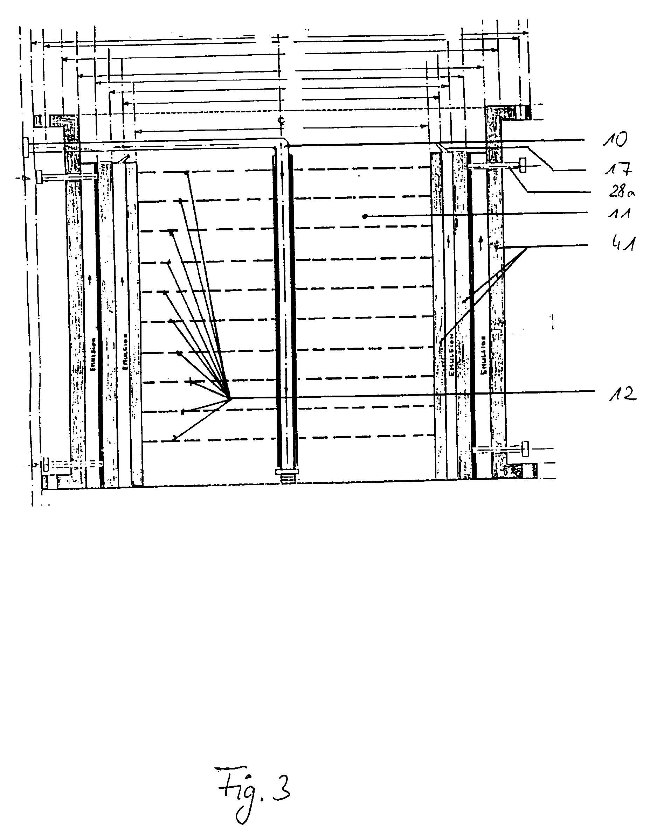

Fig. 3 is showing the lower section of the rectification-unit as illustrated in fig. 1. Again line 10 can be seen leading in the center 11 down to the perforated plate trays 12. Heat exchanger is supplied with a condensate via lines 28a to save energy. Emulsion is directed from the sump area of the perforated stage vessel to the upper end of the vessel where the nozzle ring 17 is welded in. There the emulgated feedwater is pressed through the nozzles and sprayed out over top section of the perforated plates 12.

Fig. 4 is showing the center-top of the rectification-unit as illustrated in fig. 1. The most characteristic device in this section is hydrocyclone X within the tunnel plate section 19 and condensate-collecting-basin 25. Additional floatswitches SS-1 which are located in the condensate-collecting-basin can be seen. Discharge pipe 28 originates at outlet opening 29, acting as suction line of a condensate pump (Ppe-2).

Fig. 5 is showing the head of the rectification-unit as illustrated in fig. 1. Filter pack 30 is installed to hold back condensate and solids. Baffle plates 31 lead the remains of the vapor towards to outlet 32. Contact-manovacuummeter 35 has also been installed and connected with electrical heater elements 18 located in the sump of the rectification-unit. Furtheron a pressure relief-valve 36 is installed.

Fig. 6 shows a block-diagram of the apparatus for the separation of light-weight hydrocarbons and aromatics from production water.

Production water flows from the coalesting tank A through pipe 1, the strainer 2 and the retention-valve RV-6 into the inventive apparatus and through pipe 3 to the DVZ-honeycomb separator B. The DVZ separates the oilphase from the emulgated water and returns the dirty oil through the pipes 4, 6 and 7 to the dirty oil tank K-1. The emulgated water leaves the separator through pipe 51 with an approximate pressure of 1.5 bar and flows via the 3-way solenoid-valve 3MV-1 and pipe 8 into the skid-mounted emulsion tank D. For the operation of the DVZ-separator, water and air are necessary (air 5 to 7 bar). Fresh water flows into the separator through valve V-1, pipe 5, strainer 9 and retention-valve RV-1.

The air supply with 5 - 7 bar is led through a bail valve KV1, pipe 10, air pressure reducing station 11a and pneumatic control valve PV-1 into the DVZ-separator. The DVZ-separator is governed by a DECKMA OCD-2 oil-in-water monitor C. A measuring line is branching off from the pipe 8, leading into the OCD-2 monitor. After the measuring procedure the fluid leaves the OCD-2 monitor through pipe 49 back into the coalesting tank A.

Should the shown ppm value on the OCD-2 monitor exceed a limit of 15 ppm, then the monitor will activate the 3-way-solenoid control valve 3MV-1 in such a way that the contaminated water will flow through pipe 7 back into the dirty oil tank K-1. When the value is less than 15 ppm, then the emulgated water will flow through valve 3MV-1 and pipe 8 into emulsion tank D. By means of pump Ppe-5 and pipe 9 the emulsion flows to the heat exchanger L, via pipe 10 and RV-4 into vacuum rectification-unit E on the side of the rectification-unit inlet at medium hight.

The further flow and rectification according to the inventive rectification-unit has already been described in the paragraphe dealing with fig. 1.

Regarding the different types of fluids/liquids emerging from the rectification-unit it can be stated that the concentrate pump Ppe-1 delivers the concentrate fluid to the dirty oil/concentrate tank K-1. A densitiy control 23 activates solenoid valve MV-2 and concentrate pump Ppe-1.

The condensate obtained and collected in the condensate-collecting-basin 25 of the upper half of the rectification-unit will be pumped out by condensate pump Ppe-2 through pipe 28 and retention valve RV-5. The condensate pump will be activated by means of floatswitches SS-1 located in the condensate-collecting-basin.

Finally the remains of the vapor, after being led around baffle plates 31 towards the outlet 32 on top center of the rectification-unit, will be evacuated through pipe 33, condensate-trap 34 and retention valve VRv-1 by means of dry-running vacuum pump DP16OVH F.

To prevent flooding of the rectification-unit E, excessive fluid will be removed through pipe 37, solenid-valve MV-3 and by means of the DVZ-suction, pumped through pipe 37 back to the DVZ-separator. Solenoid-valve MV-3 will be activated by means of floatswitches (not shown), mounted inside the rectification unit.

To avoid dry-running of the rectification-unit, a freshwater supply has been installed, pipe 40 and the solenoid valve NV4, controlled by a float switch mounted inside the rectification-unit.

To increase the economical efficiency of the unit, heat exchangers 41 have been installed on the inside of the unit so that, if available, also cooling water of generator-sets or turbines can be led through.

After the skid-mounted condensate-bottom tank G, the UV-oxidation plant H has been installed. The condensator will be pumped out of the tank by means of a magnetic-coupled pump Ppe-4, controlled by floatswitches (not shown) mounted inside the bottom tank G and delivered through the UV-oxidation plant. Here the remaining aromatics will be eliminated.

The aliphatic measuring device comprises an OMS-40 monitor. The OMS-40 monitor J has been connected with the overboard discharge line 45 by means of a measuring line 47. This unit is especially designed for analysing oil-in-water contents without solid according to the dutch regulation NEN 6675 mod.

The monitor is equipped with a printer. The output-signals (in ppm) will be transmitted to the receiving equipment on the center-line-platform. The OMS-40 is connected with a 3-way solenoid-valve 3 MV-2. Should the ppm-values exceed their limit of 40 ppm, the solenoid-valve will close the overboard discharge 45 and recycle the contaminated water back through the pipe 21 by means of a transfer-pump Ppe-1 to the coalesting tank A on board the platform.

The aromatic measuring device I has been connected with the overboard-discharge line 45 by means of a measuring line 46. This unit is especially designed for analysing aromatic contents in water. The unit is equipped with a printer. The output signals (in ppm) will be transmitted to the receiving equipment on the center-line-platform. The device is connected with a 3-way solenoid-valve 3MV-2. Should the ppm-values exceed the limit of 40 ppm the solenoid valve will close the overboard discharge 45 and recycle the contaminated water back to pipe 21 by means of transfer pump Ppe-1 to the coalesting tank A onboard the platform.

The transmitted signals from the different units within the inventive apparatus will be received on the center line equipment and shown a monitor as described before.

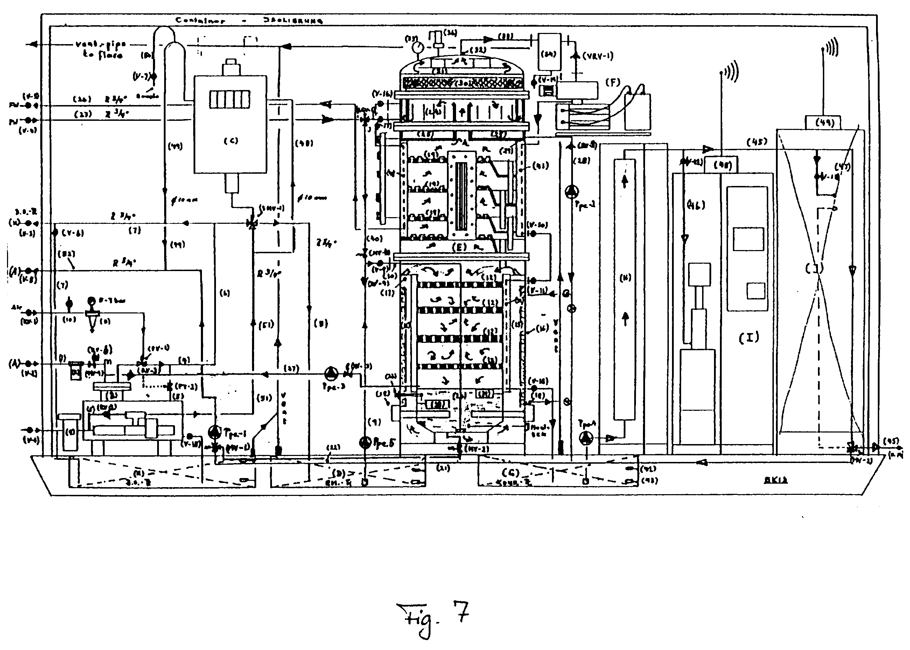

Fig. 7 is showing a flow-diagram of the inventive apparatus for the separation of light-weight hydrocarbons and aromatics from production water. The flow and processing of production water is identical to the one illustrated in Fig. 6.

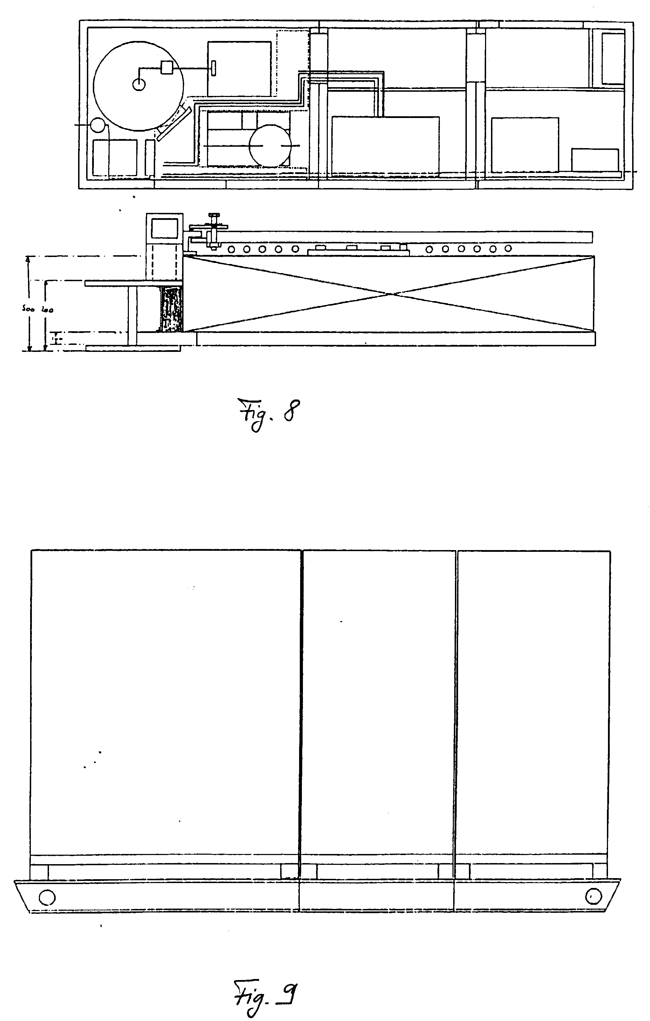

Fig. 8 is showing an arrangement of components and skid-mounting-plates.

Fig. 9 is showing a skid with three containers for the reception of the inventive apparatus.

Although the above given explanations to the enclosed drawings referred to the situation that the inventive apparatus for the separation of light-weight hydrocarbons and aromatics from production water is used on offshore platforms, its use is not limited to this. Rather the foregoing detailed description has been given for clearness of understanding only and no unnecessary limitation should be understood therefrom, as modifications will be obvious to those skilled in the art.

### Reference list

- 1: pipe
- 2: strainer
- 3: pipe
- 4: pipe
- 5: pipe
- 6: pipe
- 7: pipe
- 8: pipe
- 9: strainer
- 10: pipe
- 11: center of perforated stage vessel
- 11a: air-pressure reducing station
- 12: perforated stage vessel
- 13: perforated stage vessel
- 14: outer outlet of the perforated stage vessel
- 16: outer mantel of the rectification-unit
- 17: nozzle ring
- 18: electric heater elements
- 19: tunnel plate sections
- 21: pipe
- 22: pipe
- 23: density control
- 23a: inductive conductivity sensor
- 24: condenser
- 25: condensate-collecting-basin
- 26: pipe (to)
- 27: pipe (from)
- 28: pipe
- 29: outlet opening of the condensate-collecting-basin
- 30: filter pack
- 31: baffle plates
- 32: outlet on top center of rectification-unit
- 33: evacuation pipe
- 34: condensate-trap
- 35: contact-manovacuummeter
- 36: pressure-relief-valve
- 37: pipe
- 40: pipe
- 41: heat exchanger
- 45: overboard discharge line
- 46: measuring line
- 47: measuring line
- 49: pipe
- 51: pipe
- I*: head of the rectification-unit
- II*: center-top of the rectification-unit
- III*: lower section of the rectification-unit
- IV*: sump of the rectification-unit
- A: coalesting tank A
- B: honeycomb separator
- C: oil-in-water monitor
- D: emulsion tank
- E: vacuum rectification-unit
- F: dry-running pump DP 160 VH
- G: condensate bottom tank
- H: UV-oxidation plant
- I: aromatic measuring device
- J: aliphatic measuring device OMS-40 monitor
- K-1: dirty oil/concentrate tank
- L: heat exchange
- X: hydrocyclone
- MV-1: ball valve
- MV-2: solenoid valve
- MV-3: solenoid valve
- NV-4: solenoid valve
- Ppe-1: condensate pump
- Ppe-2: condensate pump
- Ppe-4: magnetic-coupled pump
- Ppe-5: pump
- PV-1: pneumatic valve
- RV-1: retention valve
- RV-4: retention valve
- RV-5: retention valve
- RV-6: retention valve
- SS-1: floatswitches
- V-1: valve
- VRV-1: retention valve
- 3 MV-1: 3-way solenoid valve
- 3 MV-2: solenoid valve

## Claims

1. Apparatus for the separation of light-weight hydrocarbons and aromatics from production water in an emulgated water feed stream, the apparatus comprising a vacuum rectification unit (E) consisting of a lower and an upper part, wherein :
- a perforated stage vessel (13) is contained within the lower part of the rectification unit (E) and comprises devices for receiving (10) and heating (18) emulgated water, the lower part of the unit (E) further comprising means (14) for leading the heated emulgated water through the annular space between the perforated stage vessel (13) and an outer mantle (16) at the pressure side of the unit (E) to a nozzle ring (17) at the top of the perforated stage vessel (13) for spraying emulgated water (17) over the top section of the perforated plates (12) arranged at one or more levels within the inner mantle for counterflow-system rectification and for concentrating organic compounds contained in the production water into a vapour stream,
- and the upper part of the vacuum rectification unit comprising a hydrocyclone (X) receiving the vapour stream and a downstream condenser (24) comprising a condensate collecting basin (25), for condensating the vapour generated at the perforated stage vessel (13) with the condensate being subjected to further processing or led to a storage tank.

2. Apparatus according to claim 1 with the upper half of the rectification-unit (E) further comprising a filter pack (30) above condenser (24) for holding back condensate and solids.

3. Apparatus according to claim 1 or 2 with the upper half of the rectification-unit (E) further comprising baffle plates (31) to lead the remains of the vapor towards an outlet (32) on top-center of the rectification-unit.

4. Apparatus according to any one of claims 1 to 3 with the upper half of the rectification-unit (E) further comprising devices for evacuating the remains of the vapor whereby said devices may additionally or solely comprise one or more means selected from the group consisting of evacuation pipe (33), condensate trap (34), retention-valve (VRV-1) and dry-running vacuum pump (F).

5. Apparatus according to any one of claims 1 to 4 with the perforated stage vessel (13) build up as follows :
- the intake pipe (10) for emulgated water, leading through the outer mantle of the rectification-housing and the housing of the perforated stage vessel to the center of the perforated stage vessel (inside section 11) of the rectification-unit (E) and at an angle of 90 degree down through the perforated plate-trays (12) to the center outlet (14) of the perforated stage vessel (13). Here the emulgated water leaves the perforated stage vessel with a pressure of approximately 1,5 bar and enters the riser chamber between inner and outer mantle.

6. Apparatus according to any one of claims 1 to 5 wherein the flow of the emulgated water being directed upwards between the housing of the perforated stage vessel (13) and the outer mantle/housing (16) of the rectification-unit (E) under a pressure of approximately 1,5 bar from the center outlet (14) of the perforated stage vessel (13) upwardly to the spraying devices (nozzles 17), passing by the lower plate-heat-exchangers, pre-heating the emulgated water.

7. Apparatus according to any one of claims 1 to 6 further comprising devices for leading the remaining liquid fraction with a boiling point above the one of water, to the sump of the rectification-unit (13) flowing down through a tunnel plate-section (19) and the perforated plate section to the sump of the rectification-unit (E).

8. Apparatus according to any one of claims 1 to 3 further comprising devices to blow down periodically the sump, with the sump being delivered to a storage tank or submitted to further processing.

9. Apparatus according to any one of claims 1 to 8 further comprising devices to blow down automatically the sump, with the sump being delivered to a storage tank or submitted to further processing.

10. Apparatus according to any one of claims 1 to 9 comprising means for the injection of freshwater to prevent saturation of the sump.

11. Apparatus according to any one of claims 1 to 10 further comprising inductive conductivity sensor (23a) generating signals being used for the prevention of saturation of the sump.

12. Apparatus according to claim 1, wherein the condensate pump (Ppe-2) being activated by at least one floatswitch located in the condensate-collecting-basin (25).

13. Apparatus according to any one of claims 1 to 12, wherein at least one suction line (28) for a condensate pump (Ppe-2) is fitted to the condensate-collecting-basin (25) below the low-position of the condensate.

14. Apparatus according to any one of claims 1 to 13, characterized by the condensate being removed from the condensate-collecting-basin (25) passing by a heat exchanger (41) mounted inside the rectification-unit (E) before being submitted to further processing or storage.

15. Apparatus according to any one of claims 1 to 14 further comprising devices for preventing flooding of the rectification-unit.

16. Apparatus according to claim 15 with the devices for preventing flooding comprising a pipe (37), a solenoid-valve (MV-3) and pumping means, by pumping excess fluid back to an appropriate earlier processing step and the corresponding devices, respectively.

17. Apparatus according to any one of claims 1 to 16 further comprising devices for avoiding dry-running of the rectification-unit.

18. Apparatus according to claim 17 with the devices for avoiding dry-running of the rectification-unit comprising a pipe (40), a solenoid-valve (MV-4) and a freshwater supply controlled by one or more floatswitches.

19. Apparatus according to any one of claims 1 to 18 with the condensate obtained from rectification being subjected to UV-oxidation.

20. Apparatus according to any one of claims 1 to 19 with a measuring device for aliphatics (J) which is connected with the line releasing the processed production water to the environment (45) for analysis of oil-in-water contents before the processed production water is released.

21. Apparatus according to claim 20 wherein a measuring device for aliphatics (J) connected with the line releasing the processed production water to the environment (45), for analysis of oil-in-water contents, before the processed production water is released, is coupled to a solenoid-valve (3 MV-2) which will close the line releasing the processed production water (45) and recycle the contaminated water back to an earlier processing step and the corresponding devices, respectively, if preset values for aliphatics in processed production water are not met.

22. Apparatus according to any one of claims 1 to 21, wherein a measuring device for aromatics (I) is connected with the line releasing the processed production water to the environment (45) for analysis of oil-in-water contents before the processed production water is released.

23. Apparatus according to claim 22 wherein a measuring device for aromatics (I) connected with the line releasing the processed production water to the environment (45), for analysis of oil-in-water contents, before the processed production water is released, is coupled to a solenoid-valve (3 MV-2) which will close the line releasing the processed production water (45) and recycle the contaminated water back to an earlier processing step and the corresponding devices, respectively, if preset values for aromatics in processed production water are not met.

24. Apparatus according to any one of the claim 21 to 23, wherein the line releasing the processed production water to the environment (45) being the overboard-discharge line in case said apparatus is used on offshore production platforms.

25. Apparatus according to any one of claims 1 to 24 with the apparatus being comprised of three insulated sections.

26. Apparatus according to any one of claims 1 to 25 with the apparatus being mounted on a skid.

27. A method for the separation of light-weight hydrocarbons and aromatics from production water being characterized by the flow of emulgated water through an apparatus according to any of the preceding claims with the emulgated water to be treated within the rectification-unit being heated to a temperature of about 40°C at a pressure of 7400 Pa (55,5 Torr).

## Patentansprüche

1. Anlage zur Abscheidung leichter Kohlenwasserstoffe und Aromate aus Prozesswasser in einem Strom zur Zuleitung von emulgiertem Wasser, welche eine aus einem oberen und einem unteren Teil bestehende Einheit (E) zur Vakuumrektifikation aufweist, bei welcher:
- im unteren Teil der Rektifiziereinheit (E) ein durchbrochener Stufentank (13) enthalten ist und Vorrichtungen zur Aufnahme (10) und Erwärmung (18) von emulgiertem Wasser aufweist, wobei der untere Teil der Einheit (E) des weiteren Einrichtungen (14) zum Durchleiten des erwärmten emulgiertem Wassers durch den Ringraum zwischen dem durchbrochenen Stufentank (13) und einem äußeren Mantel (16) auf der Druckseite der Einheit (E) zu einem Düsenring (17) oben an dem durchbrochenen Stufentank (13) zum Versprühen von emulgiertem Wasser über den oberen Abschnitt der Lochplatten (12) aufweist, die innerhalb des inneren Mantels auf einer oder mehreren Ebenen zur Rektifizierung im Gegenstrom und zum Konzentrieren von in dem Prozesswasser enthaltenen organischer Verbindungen in einen Dampfstrom angeordnet sind,
- und der obere Teil der Einheit (E) zur Vakuumrektifikation einen Hydrozyklon (X), welcher den Dampfstrom aufnimmt, sowie einen abströmseitigen Kondensierer (24) aufweist, welcher einen Behälter (25) zum Auffangen von Kondensat und zum Kondensieren des am durchbrochenen Stufentank (13) erzeugten Dampfes, wobei das Kondensat einer weiteren Behandlung unterzogen oder einem Lagertank zugeleitet wird.

2. Anlage nach Anspruch 1,
bei welcher die obere Hälfte der Rektifiziereinheit (E) des weiteren über dem Kondensierer (24) eine Filterbaugruppe (30) zum Zurückhalten von Kondensat und Feststoffen aufweist.

3. Anlage nach Anspruch 1 oder 2,
bei welcher die obere Hälfte der Rektifiziereinheit (E) des weiteren Leitplatten (31) aufweist, welche die Dampfreste zu einem Auslass (32) oben in der Mitte der Rektifiziereinheit leiten.

4. Anlage nach einem der Ansprüche 1 bis 3,
bei welcher die obere Hälfte der Rektifiziereinheit (E) des weiteren Vorrichtungen zum Austragen der Dampfteste aufweist, wobei die Vorrichtungen gegebenenfalls zusätzlich oder ausschließlich eine oder mehrere Einrichtungen aufweisen, die aus der Gruppe gewählt sind, welche eine Austragsleitung (33), einen Kondensatabscheider (34), ein Rückhalteventil (VRV-1) und eine Trockenlauf-Vakuumpumpe (F) umfasst.

5. Anlage nach einem der Ansprüche 1 bis 4, bei welcher der durchbrochene Stufentank (13) folgendermaßen aufgebaut ist:
- das Einlassrohr (10) für emulgiertes Wasser führt durch den äußeren Mantel des Rektifiziergehäuses und das Gehäuse des durchbrochenen Stufentanks zur Mitte des durchbrochenen Stufentanks (innerer Abschnitt 11) der Rektifiziereinheit (E) und unter einem Winkel von 90° nach unten durch die durchbrochenen Plattenböden (12) zum Mittelauslass (14) des durchbrochenen Stufentanks (13), wo das emulgierte Wasser aus dem durchbrochenen Stufentank mit einem Druck von etwa 1,5 bar austritt und in die Steigkammer zwischen dem inneren und äußeren Mantel eintritt.

6. Anlage nach einem der Ansprüche 1 bis 5, bei welcher der Strom emulgierten Wassers nach oben zwischen dem Gehäuse des durchbrochenen Stufentanks (13) und dem äußeren Mantel/Gehäuse (16) der Rektifiziereinheit (E) unter einem Druck von etwa 1,5 bar aus dem Mittelauslass (14) des durchbrochenen Stufentanks (13) aufwärts zu den Sprühvorrichtungen (Düsen 17) geleitet wird und dabei unter Vorerwärmung des emulgierten Wassers an den unteren Plattenwärmetauschern vorbeiströmt.

7. Anlage nach einem der Ansprüche 1 bis 6, welche des weiteren Vorrichtungen aufweist, welche die verbleibende Flüssigkeitsfraktion mit einem Siedepunkt über dem Siedepunkt des Wassers zum Auffangbehälter der Rektifiziereinheit (13) leitet und dabei durch einen Tunnelplattenabschnitt (19) und den durchbrochenen Plattenabschnitt nach unten zum Auffangbehälter der Rektifiziereinheit (E) strömt.

8. Anlage nach einem der Ansprüche 1 bis 3, welche des weiteren Vorrichtungen aufweist, die den Auffangbehälter in periodischen Abständen durch Ausblasen entleeren, wobei der Inhalt des Auffangbehälters an einen Lagertank weitergeleitet oder einer weiteren Verarbeitung unterzogen wird.

9. Anlage nach einem der Ansprüche 1 bis 8, welche des weiteren Vorrichtungen aufweist, die den Auffangbehälter automatisch durch Ausblasen entleeren, wobei der Inhalt des Auffangbehälters an einen Lagertank weitergeleitet oder einer weiteren Verarbeitung unterzogen wird.

10. Anlage nach einem der Ansprüche 1 bis 9, welche Einrichtungen zum Einspritzen von Frischwasser zum Verhindern der Sättigung des Inhalts des Auffangbehälters aufweist.

11. Anlage nach einem der Ansprüche 1 bis 10, welche außerdem einen induktiven Leitfähigkeitssensor (23a) zur Erzeugung von Signalen aufweist, welche zum Verhindern der Sättigung des Inhalts des Auffangbehälters eingesetzt werden.

12. Anlage nach Anspruch 1, bei welcher die Kondensatpumpe (Ppe-2) durch mindestens einen in dem Kondensatauffangbehälter (25) befindlichen Schwimmerschalter aktiviert wird.

13. Anlage nach einem der Ansprüche 1 bis 12, bei welcher mindestens eine Ansaugleitung (28) für eine Kondensatpumpe (Ppe-2) unterhalb der Höhe des Niedrigstands des Kondensats am Kondensatauffangbehälter angeordnet ist.

14. Anlage nach einem der Ansprüche 1 bis 13, dadurch gekennzeichnet, dass das Kondensat aus dem Kondensatauffangbehälter (25) abgezogen wird und dabei an einem Wärmetauscher (41) vorbeiströmt, der innerhalb der Rektifiziereinheit (E) angeordnet ist, ehe es einer weiteren Verarbeitung oder Lagerung unterzogen wird.

15. Anlage nach einem der Ansprüche 1 bis 14, welche außerdem Vorrichtungen zum Verhüten einer Flutung der Rektifiziereinheit aufweist.

16. Anlage nach Anspruch 15, bei welcher die Vorrichtungen zum Verhüten einer Flutung eine Rohrleitung (37), ein Magnetventil (NV-3) und Pumpeinrichtungen umfasst, wobei überschüssiges Strömungsmittel zu einer entsprechenden vorhergehenden Verarbeitungsstufe bzw. den entsprechenden Vorrichtungen zurückgepumpt wird.

17. Anlage nach einem der Ansprüche 1 bis 16, welche des weiteren Vorrichtungen zum Vermeiden des Trockenlaufens der Rektifiziereinheit aufweiset.

18. Anlage nach Anspruch 17, bei welcher die Vorrichtungen zum Vermeiden des Trockenlaufens der Rektifiziereinheit eine Rohrleitung (40), ein Magnetventil (MV-4) und eine Frischwasserzuführung umfassen, die durch einen oder mehrere Schwimmerschalter ansteuerbar sind.

19. Anlage nach einem der Ansprüche 1 bis 18, bei welcher das aus der Rektifikation erhaltene Kondensat einer UV-Oxidation unterzogen wird.

20. Anlage nach einem der Ansprüche 1 bis 19, welche eine Messvorrichtung zum Messen von aliphatischen Substanzen (J) aufweist, die mit der Leitung verbunden ist, über welche das verarbeitete Prozesswasser zur Analyse des Öl-in-Wasser-Gehalts vor Freisetzung des verarbeiteten Prozesswassers in die Umgebung freigesetzt wird.

21. Anlage nach Anspruch 20, bei welcher eine Messvorrichtung zum Messen von aliphatischen Substanzen (J), die mit der Leitung zur Freigabe des verarbeiteten Prozesswassers an die Umgebung (45) zur Analyse des Öl-in-Wasser-Gehalts vor Freigabe des verarbeiteten Prozesswassers mit einem Magnetventil (3 MV-2) gekoppelt ist, welches die Leitung zur Freigabe des verarbeiteten Prozesswassers (45) schließt und das verunreinigte Wasser zurück zu einer vorhergehenden Verarbeitungsstufe bzw. die entsprechenden Vorrichtungen zurückführt, wenn für die aliphatischen Substanzen in verarbeitetem Prozesswassers voreingestellte Werte nicht eingehalten werden.

22. Anlage nach einem der Ansprüche 1 bis 21, bei welcher eine Messvorrichtung zum Messen aromatischer Substanzen (I) mit der Leitung zur Freigabe des verarbeiteten Prozesswassers an die Umgebung (45) zur Analyse des Öl-in-Wasser-Gehalts vor Freigabe des verarbeiteten Prozesswassers verbunden ist.

23. Anlage nach Anspruch 22, bei welcher eine Messvorrichtung zum Messen von aromatischen Substanzen (I), die mit der Leitung zur Freigabe des verarbeiteten Prozesswassers an die Umgebung (45) zur Analyse des Öl-in-Wasser-Gehalts vor Freigabe des verarbeiteten Prozesswassers mit einem Magnetventil (3 MV-2) gekoppelt ist, welches die Leitung zur Freigabe des verarbeiteten Prozesswassers (45) schließt und das verunreinigte Wasser zurück zu einer vorhergehenden Verarbeitungsstufe bzw. die entsprechenden Vorrichtungen zurückführt, wenn für die aromatische Substanzen in verarbeitetem Prozesswassers voreingestellte Werte nicht eingehalten werden.

24. Anlage nach einem der Ansprüche 21 bis 23, bei welcher die Leitung zur Freigabe des verarbeiteten Prozesswassers an die Umgebung die Überbord-Austragsleitung für den Fall ist, dass die Anlage auf Förderplattformen vor der Küste eingesetzt wird.

25. Anlage nach einem der Ansprüche 1 bis 24, bei welcher drei voneinander getrennte Abschnitte vorgesehen sind.

26. Anlage nach einem der Ansprüche 1 bis 25, welche auf Kufen montiert ist.

27. Verfahren zur Abscheidung leichter Kohlenwasserstoffe und Aromate aus Prozesswasser, gekennzeichnet durch den Strom emulgierten Wassers durch eine Anlage nach einem der vorhergehenden Ansprüche, wobei das in der Rektifiziereinheit zu behandelnde emulgierte Wasser auf eine Temperatur von rund 40° C bei einem Druck von 7400 Pa (55,5 Torr) erwärmt wird.

## Revendications

1. Appareil de séparation des hydrocarbures légers et des aromatiques émulsionnés dans l'eau de production dans un courant d'amenée d'eau, l'appareil étant **caractérisé** en ce qu'il comporte une unité de rectification sous vide (E) constituée d'une partie inférieure et d'une partie supérieure et en ce que :
- un réservoir d'étage perforé (13) est contenu dans la partie inférieure de l'unité de rectification (E) et comporte des dispositifs pour recevoir (10) et chauffer (18) l'eau émulsionnée, la partie inférieure de l'unité (E) comportant en outre des moyens (14) pour amener l'eau émulsionnée chauffée par l'espace annulaire entre le réservoir d'étage perforé (13) et un manteau extérieur (16) au côté sous pression de l'unité (E) jusqu'à une bague de buse (17), au sommet du réservoir d'étage perforé (13), pour pulvériser l'eau émulsionnée (17) au-dessus de la section supérieure des plaques perforées (12) disposées à un ou davantage de niveaux dans le manteau intérieur pour une rectification à contre courant et pour concentrer les composés organiques contenus dans l'eau de production dans un courant de vapeur,
- et la partie supérieure de l'unité de rectification sous vide comporte un hydrocyclone (X) recevant le courant de vapeur et un condenseur aval (24) muni d'un bassin de collecte de condensât, afin de condenser la vapeur générée dans le réservoir d'étage perforé (13), le condensât étant soumis à un traitement supplémentaire ou amené à un réservoir de stockage.

2. Appareil selon la revendication 1, **caractérisé** en ce que la moitié supérieure de l'unité de rectification (E) comporte en outre une garniture de filtre (30) au-dessus du condenseur (24) pour retenir le condensât et les solides.

3. Appareil selon la revendication 1 ou 2, **caractérisé** en ce que la moitié supérieure de l'unité de rectification (E) comporte en outre des plaques déflectrices (31) pour amener le restant de la vapeur vers un orifice de sortie (32) au sommet et au centre de l'unité de rectification.

4. Appareil selon une quelconque des revendications 1 à 3, **caractérisé** en ce que la moitié supérieure de l'unité de rectification (E) comporte en outre des dispositifs pour évacuer le restant de la vapeur, lesdits dispositifs pouvant être munis, en outre, d'un ou plusieurs moyens choisis parmi le groupe constitué d'un tuyau d'évacuation (33), d'un piège à condensât (34), d'une valve de rétention (VRV-1) et d'une pompe à vide fonctionnant à sec (F).

5. Appareil selon une quelconque des revendications 1 à 4, **caractérisé** en ce que le réservoir d'étage perforé (13) est constitué par le tuyau d'amenée (10) de l'eau émulsionnée, passant par le manteau extérieur de l'enveloppe de rectification et l'enveloppe du réservoir d'étage perforé et menant au centre du réservoir d'étage perforé (à l'intérieur de la section 11) de l'unité de rectification (E) puis avec un angle de 90 ° vers le bas par les plateaux perforés (12) jusqu'à l'orifice de sortie central (14) du réservoir perforé (13), l'eau émulsionnée quittant ici le réservoir d'étage perforé sous une pression d'environ 1,5 bars et pénétrant dans la chambre montante entre le manteau intérieur et le manteau extérieur.

6. Appareil selon une quelconque des revendications 1 à 5, **caractérisé** en ce que l'écoulement de l'eau émulsionnée est dirigé vers le haut entre l'enveloppe du réservoir d'étage perforé (13) et l'enveloppe/manteau extérieur (16) de l'unité de rectification (E), sous une pression d'environ 1,5 bars, depuis l'orifice de sortie central (14) du réservoir d'étage perforé (13) vers le haut jusqu'aux dispositifs de pulvérisation (buses 17), en passant par les échangeurs de chaleur inférieurs en plaques, qui préchauffent l'eau émulsionnée.

7. Appareil selon une quelconque des revendications 1 à 6, **caractérisé** en ce qu'il comporte, en outre, des dispositifs pour amener la fraction liquide restante, avec un point d'ébullition plus élevé que celui de l'eau, jusqu'à la cuve de l'unité de rectification (13) en s'écoulant vers le bas dans une section de plaque en tunnel (19) et la section en plaque perforée jusqu'à la cuve de l'unité de rectification (E).

8. Appareil selon une quelconque des revendications 1 à 3, **caractérisé** en ce qu'il comporte, en outre, des dispositifs pour vider périodiquement la cuve, celle-ci étant délivrée à un réservoir de stockage ou soumise à un traitement supplémentaire.

9. Appareil selon une quelconque des revendications 1 à 8, **caractérisé** en ce qu'il comporte, en outre, des dispositifs pour vider automatiquement la cuve, celle-ci étant délivrée à un réservoir de stockage ou soumise à un traitement supplémentaire.

10. Appareil selon une quelconque des revendications 1 à 9, **caractérisé** en ce qu'il comporte des moyens pour l'injection d'eau fraîche pour empêcher la saturation du conteneur de la cuve.

11. Appareil selon une quelconque des revendications 1 à 10, **caractérisé** en ce qu'il comporte un capteur de conductivité inductif (23a) générant des signaux utilisés pour la prévention de la saturation du conteneur de la cuve.

12. Appareil selon la revendication 1, **caractérisé** en ce que la pompe de condensât (Ppe-2) est activée par au moins un commutateur à flotteur disposé dans le bassin de collecte de condensât (25).

13. Appareil selon une quelconque des revendications 1 à 12, **caractérisé** en ce qu'au moins une ligne de succion (28) pour une pompe de condensât (Ppe-2) est ajustée au bassin de collecte de condensât (25) au-dessous de la position basse du condensât.

14. Appareil selon une quelconque des revendications 1 à 13, **caractérisé** en ce que le condensât est retiré du bassin de collecte de condensât (25) et fait passer par un échangeur de chaleur (41) monté à l'intérieur de l'unité de rectification (E) avant d'être soumis à des traitements supplémentaires ou stocké.

15. Appareil selon une quelconque des revendications 1 à 14, **caractérisé** en ce qu'il comporte, en outre, des dispositifs pour empêcher le noyage de l'unité de rectification.

16. Appareil selon la revendication 15, **caractérisé** en ce que les dispositifs pour empêcher le noyage comportent un tuyau (37), une valve à solénoïde (MV-3) et des moyens de pompage pompant l'excès de fluide à nouveau vers une étape antérieure appropriée du traitement et ses dispositifs correspondants, respectivement.

17. Appareil selon une quelconque des revendications 1 à 16, **caractérisé** en ce qu'il comporte des dispositifs pour empêcher le fonctionnement à sec de l'unité de rectification.

18. Appareil selon la revendication 17, **caractérisé** en ce que les dispositifs pour empêcher le fonctionnement à sec de l'unité de rectification comportent un tuyau (40), une valve à solénoïde (MV-4) et une alimentation en eau fraîche commandée par un ou plusieurs commutateurs à flotteur.

19. Appareil selon une quelconque des revendications 1 à 18, **caractérisé** en ce que le condensât obtenu par rectification est soumis à une oxydation par ultraviolets.

20. Appareil selon une quelconque des revendications 1 à 19, **caractérisé** en ce qu'il comporte un dispositif de mesure des aliphatiques (J), relié à la ligne libérant l'eau de production traitée dans l'environnement (45) afin d'analyser les teneurs d'huile dans l'eau avant que l'eau de production traitée ne soit libérée.

21. Appareil selon la revendication 20, **caractérisé** en ce que le dispositif de mesure des aliphatiques (J), relié à la ligne libérant l'eau de production traitée dans l'environnement (45) afin d'analyser les teneurs d'huile dans l'eau avant que l'eau de production traitée ne soit libérée, est couplé à une valve à solénoïde (3MV-2) qui ferme la ligne libérant l'eau de production traitée (45) et recycle l'eau contaminée à nouveau vers une étape antérieure de traitement et ses dispositifs correspondants, respectivement, si des valeurs présélectionnées d'aliphatiques dans l'eau de production traitée sont dépassées.

22. Appareil selon une quelconque des revendications 1 à 21, **caractérisé** en ce qu'un dispositif de mesure des aromatiques (I) est relié à la ligne libérant l'eau de production traitée dans l'environnement (45) afin d'analyser les teneurs d'huile dans l'eau avant que l'eau de production traitée ne soit libérée.

23. Appareil selon la revendication 22, **caractérisé** en ce que le dispositif de mesure des aromatiques (I), relié à la ligne libérant l'eau de production traitée dans l'environnement (45) afin d'analyser les teneurs d'huile dans l'eau avant que l'eau de production traitée ne soit libérée, est couplé à une valve à solénoïde (3MV-2) qui ferme la ligne libérant l'eau de production traitée (45) et recycle l'eau contaminée à nouveau vers une étape antérieure de traitement et ses dispositifs correspondants, respectivement, si des valeurs présélectionnées d'aromatiques dans l'eau de production traitée sont dépassées.

24. Appareil selon une quelconque des revendications 21 à 23, **caractérisé** en ce que la ligne libérant l'eau de production traitée dans l'environnement (45) est une ligne de décharge par-dessus bord au cas où ledit appareil serait utilisé dans des plates-formes de production en mer.

25. Appareil selon une quelconque des revendications 1 à 24, **caractérisé** en ce que l'appareil est constitué de trois sections isolées.

26. Appareil selon une quelconque des revendications 1 à 25, **caractérisé** en ce que l'appareil est monté sur patin.

27. Procédé de séparation des hydrocarbures légers et des aromatiques émulsionnés dans l'eau de production, **caractérisé** en ce que l'écoulement de l'eau émulsionnée s'effectue dans un appareil selon une quelconque des revendications précédentes, l'eau émulsionnée destinée à être traitée dans l'unité de rectification étant chauffée à une température d'environ 40 °C à une pression de 7400 Pa (55,5 Torr).
